# EUROPEAN PATENT APPLICATION

(11) **EP 2 403 231 A1**
(43) Date of publication of application: **04.01.2012**
(21) Application number: 11005364.2
(22) Date of filing: 30.06.2011
(51) Int. Cl.: H04N 5/00, H04N 21/4227

(54) **Method for setting reservation in broadcast receiver**

(30) Priority: 01.07.2010 KR 20100063243
(71) Applicant: Humax Co., Ltd., Seongnam-si, Gyeonggi-do 463-825 (KR)
(72) Inventor: Kim, Soyoung, Seongnam-si Gyeonggi-do, 463-825 (KR)
(74) Representative: TER MEER - STEINMEISTER & PARTNER GbR

(57) **Abstract**

A method for setting reservation in a broadcast receiver is disclosed. In one embodiment, reservation information supposed to be applied to a second broadcast receiver for carrying out reserved playing or recording of a broadcast program is generated by a first broadcast receiver and the generated reservation information is transmitted through a network; the reservation information can comprise an identifier of a broadcast program for reserved playing or recording. The reservation information can be transmitted directly to the second broadcast receiver or transmitted to the second broadcast receiver through a server related to broadcast receivers. Before generating the reservation information, broadcast channel information which can be received by the second broadcast receiver can be received from the server and based on the received broadcast channel information, the reservation information can be generated. Therefore, the user can remotely set reservation information about a broadcast program in a different broadcast receiver.

## Description

### BACKGROUND

### Field

This document relates to a method for setting reservation in a broadcast receiver. More specifically, this document relates to a method for reserving broadcast programs in a broadcast receiver equipped with a network function.

### Related Art

Various types of digital broadcast receivers such as a set-top box (STB) and a digital television (D-TV) are now in wide use. The set-top box decodes broadcast programs in the form of MPEG data streams received through a broadcast channel into audio and video data and outputs the decoded broadcast programs to a television.

The set-top box can be equipped with a personal video recorder (PVR) function which records a digital broadcast program into a massive storage such as a hard disk; the set-top box can also be connected to an IP server (or an IP-TV server) which provides various types of broadcast programs and contents through a network such as the Internet.

The set-top box receives electronic program guide (EPG) information (which is guide information about broadcast programs) and displays the received information on a TV screen, allowing the user to select a broadcast program that the user wants to watch. If the user selects a particular program, the set-top box sets up and stores reservation information comprising the start/end time of the broadcast program, broadcast channel information, and the corresponding broadcast program title, the reservation information being used for either reserved watching (or reserved playing) or reserved recording.

The set-top box, if it is decided with reference to the reservation information that current time corresponds to the start time of the broadcast program, carries out reserved watching operation of selecting the corresponding broadcast channel and outputting the broadcast program received through the broadcast channel to a television or reserved recording operation of recording the received program in a storage such as a hard disk (HDD).

However, for the set-top box to carry out the reserved watching operation or the reserved recording operation, the user should perform a procedure consisting of complicated steps selecting a broadcasting program that the user wants to watch with reference to EPG information and setting the selected program in the form of reserved watching information or reserved recording information; thus, some users (e.g., elderly people, children, and disabled people) have found it difficult to reserve a broadcast program for watching or recording.

### SUMMARY

An aspect of this document is to provide a method for setting reservation information remotely through a different broadcast receiver equipped with a network function.

A method for setting reservation in a broadcast receiver according to the present invention comprises a first broadcast receiver's generating reservation information supposed to be applied to a second broadcast receiver for carrying out reserved playing or recording of a broadcast program, the reservation information comprising an identifier of a broadcast program for reserved playing or recording; and the first broadcast receiver's transmitting the generated reservation information through a network.

In one embodiment, identifying information of the first broadcast receiver can be transmitted additionally together with the reservation information.

In one embodiment, the first broadcast receiver can either transmit the reservation information directly to the second broadcast receiver or transmit to the second broadcast receiver through a server related to broadcast receivers.

In one embodiment, the first broadcast receiver, before generating the reservation information, can receive broadcast channel information which can be received by the second broadcast receiver from a server.

In one embodiment, the first broadcast receiver, at the time of transmitting the reservation information through the server, can additionally transmit to the server at least one or more of identifying information of the second broadcast receiver, user identification information of the second broadcast receiver, and IP address of the second broadcast receiver.

In one embodiment, reservation information transmitted to the server can be converted by the server in such a way to be applied for the second broadcast receiver and thus transmitted to the second broadcast receiver together with identifying information of the first broadcast receiver.

A method for setting reservation in a broadcast receiver according to another embodiment of the present invention comprises transmitting identifying information and IP address of a broadcast receiver to a server related to a broadcast receiver; receiving reservation information from the server transmitted from another broadcast receiver and storing the received reservation information in a memory or displaying a guide message; and once the reservation information is set in the broadcast receiver, playing or recording a broadcast program according to the reservation information.

In one embodiment, channel information which can be received by the broadcast receiver can be additionally transmitted to the server.

In one embodiment, user identification information used for setting reservation information remotely can be additionally transmitted to the server.

In one embodiment, the receiving can further receive identifying information of said another broadcast receiver together with the reservation information and can display identifying information of said another broadcast receiver at the time of displaying the reservation information.

A broadcast receiver according to another embodiment of the present invention comprises a image generation unit for displaying reservation information or displaying another broadcast receiver for setting reservation information; a communication unit for transmitting and receiving data through a network; and a controller for generating reservation information supposed to be applied to said another broadcast receiver for carrying out reserved playing or recording of a broadcast program and transmitting the generated reservation information and its own broadcast receiver's identifying information directly to said another broadcast receiver or to said another broadcast receiver through a server related to broadcast receivers by controlling the communication unit, wherein the reservation information comprises an identifier of a broadcast program for which reserved playing or recording is applied at said another broadcast receiver.

In one embodiment, the controller can receive from the server broadcast channel information which can be received by said another broadcast receiver and generate the reservation information with reference to the broadcast channel information.

Therefore, it is possible to set reservation of broadcast programs in a different broadcast receiver.

### BRIEF DESCRIPTION OF THE DRAWINGS

**T**he implementation of this document will be described in detail with reference to the following drawings in which like numerals refer to like elements.

FIG. 1 illustrates an embodiment of a set-top box to which the present invention is applied;

FIG. 2 illustrates an embodiment of structure of a set-top box to which the present invention is applied;

FIG. 3 illustrates a flow diagram of operation in a set-top box at a transmitter's side to which the present invention is applied;

FIGS. 4 and 5 illustrate an embodiment of screens displayed by a set-top box at a transmitter's side to which the present invention is applied;

FIG. 6 illustrates a flow diagram in a set-top box at a receiver's side to which the present invention is applied; and

FIGS. 7 and 8 illustrate an embodiment of screens displayed by a set-top box at a receiver's side to which the present invention is applied.

### DETAILED DESCRIPTION

In what follows, a method for setting reservation in a broadcast receiver according to the present invention will now be described more fully with reference to the accompanying drawings.

A method for setting reservation according to the present invention can be applied to various types of broadcast receivers such as a set-top box (STB) and a digital television (D-TV).

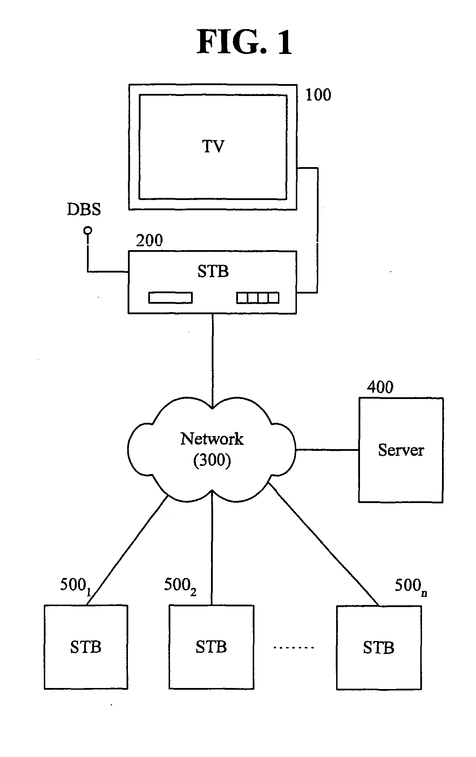

**For** example, as shown in FIG. 1, a set-top box (STB) 200 decodes broadcast programs in the form of MPEG data streams received through a broadcast channel into audio and video data and outputs the decoded broadcast programs to a television 100.

Also, the set-top box 200 can not only receive various types of contents while being connected to an external server 400 through a network 300 such as the Internet but also be connected to a plurality of external devices through the network 300; for example, as shown in FIG. 1, the set-top box 200 is connected to a plurality Of set-top boxes 500₁∼500ₙ equipped with a network function.

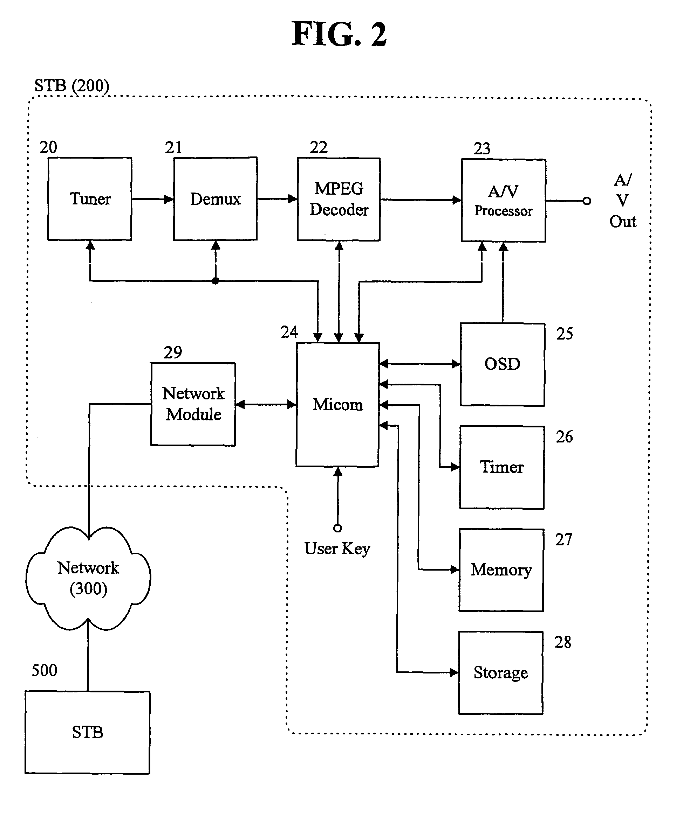

For example, the set-top box 200, as shown in FIG. 2, can comprise a tuner 20, a demux 21, an MPEG decoder 22, an A/V decoder 23, a controller 24, an OSD generation unit 25, a timer 26, a memory 27, storage 28, and a network module 29.

The set-top box. 200 can transmit reservation information which allows the user to carry out either of reserved watching and reserved recording of a broadcast program with reference to EPG information to a different set-top box connected through the network 300, where the different set-top box may be used by those users like elderly people, children, and disabled people who are not familiar with EPG searching and reservation setting.

The set-top box which receives the reservation information carries out reservation information setting operation of storing reservation information received through the network 300 in a memory; the set-top box can then carry out a series of reserved watching operations (reserved playing) or reserved recording operations where the corresponding broadcast program is tuned at a predetermined reservation time and displayed on a TV screen or recorded in the storage 28 with reference to the reserved information respectively. In the following, the above operation will be described in more detail.

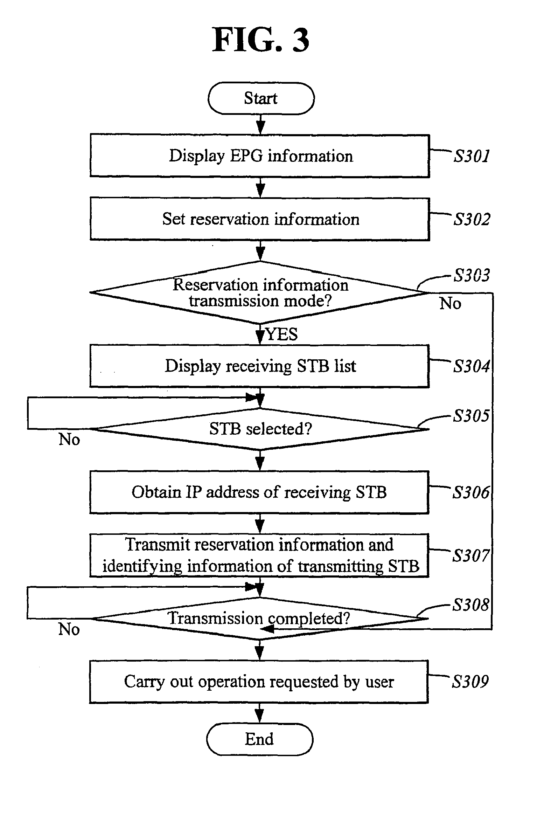

FIG. 3 illustrates a flow diagram of operation in a set-top box at a transmitter's side to which the present invention is applied.

A controller 24 of a set-top box comprised as described with reference to FIG. 2 carries out EPG information display operation S301 which displays EPG information received through the tuner 20, the demux 21, and the MPEG decoder 22 along with broadcast data streams on a television 100 screen according to the user's request.

The controller 24, by using EPG information displayed through the television screen, selects a broadcast program wanted by the user and sets reservation information as either reserved watching or reserved recording S302. In this case, reservation information comprising start/end time, broadcast channel, and broadcast program title (or program identifier) of the selected broadcast program is generated and stored in a non-volatile memory 27 such as flash memory.

In the case of setting reservation information, the controller 24, by controlling the OSD generation unit 25, displays menu items for entering 'reservation information transmission mode' automatically or displays the menu items selectively according to the key inputs of the user.

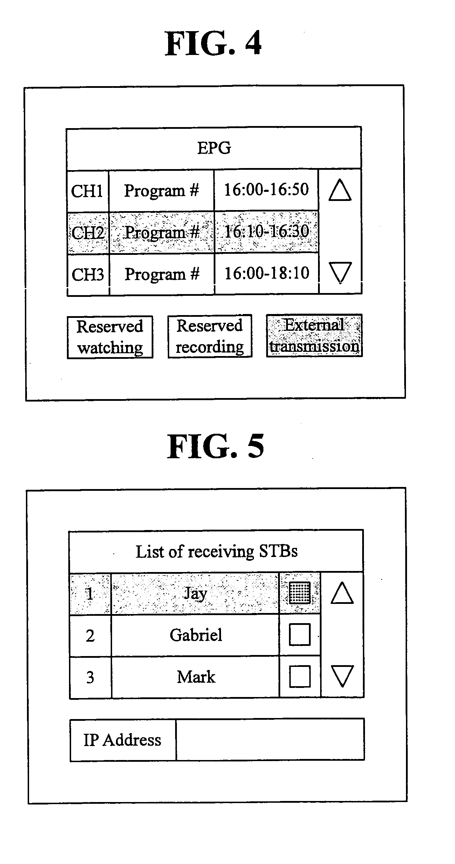

For example, as shown in FIG. 4, if the user indicates a broadcast program to be broadcast through a second broadcast channel (CH2), displayed are a first menu item (e.g., reserved watching) for setting the second broadcast channel, the corresponding broadcast program title, and broadcast start/end time (16:10∼16:30) as reservation watching information; and a second menu item (e.g., reserved recording) for setting them as reserved recording information. At the same time, a third menu item (e.g., external transmission) for transmitting the reserved information to an external device is displayed.

The controller 24, if the third menu item is selected, enters reservation information transmission mode S303. In this case, the controller 24, by controlling the OSD generation unit 25, displays a list of receiving set-top boxes where reserved operation is supposed to be carried out after the reservation information is applied S304.

The list information can be stored previously in the memory 27 or directly input/edited by the user. For example, a user name (or an identifier) representing each set-top box and a unique IP address information are stored in association with each other in the form of a look up table; as shown in FIG. 5, user names of the respective set-top boxes can be displayed in the form of a list on a list screen of a receiving set-top box.

If a user name (e.g.. Jay) is selected through the receiving set-top box list S305, the controller 24 can obtain IP address stored in association with the selected user name by searching the memory 27 or as shown in FIG. 5, the user can directly input the IP address through an input window S306.

Also, the controller 24, after obtaining IP address as described above, controls the network module 29 and transmits the reservation information and identifying information of a transmitting set-top box provided to the controller 24 to the IP address S307; for example, the user name of the transmitting set-top box can be used for the identifying information.

The reservation information to be transmitted, instead of comprising all of a broadcast channel, a broadcast program title, broadcast start/end time, can comprise only the broadcast program title (or identifier) or the broadcast program title and the broadcast start/end time. Also, the reservation information can further comprise a flag indicating either of reserved watching and reserved recording.

The controller 24, if a responding command is received from the receiving set-top box after the reservation information and identifying information of a transmitting set-top box are transmitted, determines that transmission has been completed successfully S308 and carries out the operation requested by the user S309.

Therefore, the user of the transmitting set-top box can not only set reservation information about a broadcast program that he or she wants to watch by using EPG information but also can set the reservation information in a different broadcast receiver of another user by transmitting the reservation information to the broadcast receiver through a network.

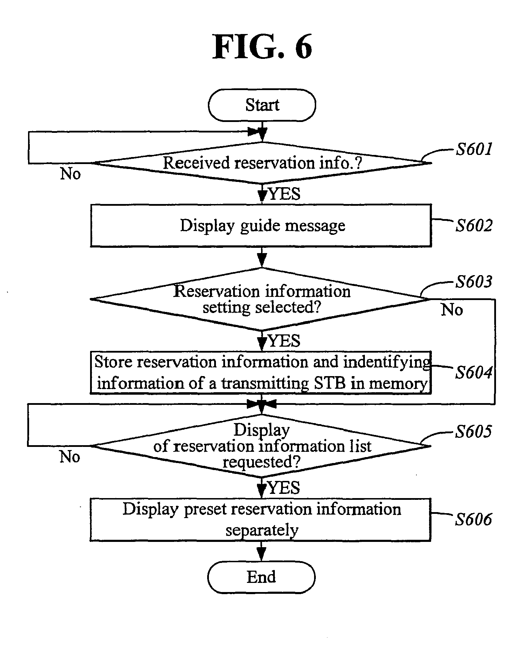

FIG. 6 illustrates a flow diagram in a set-top box at a receiver's side to which the present invention is applied.

As described above with reference to FIG. 4, a receiving set-top box which receives reservation information and identifying information of a transmitting set-top box through a network, if reservation information is received while being connected to a network S601, displays a guide message corresponding thereto S602.

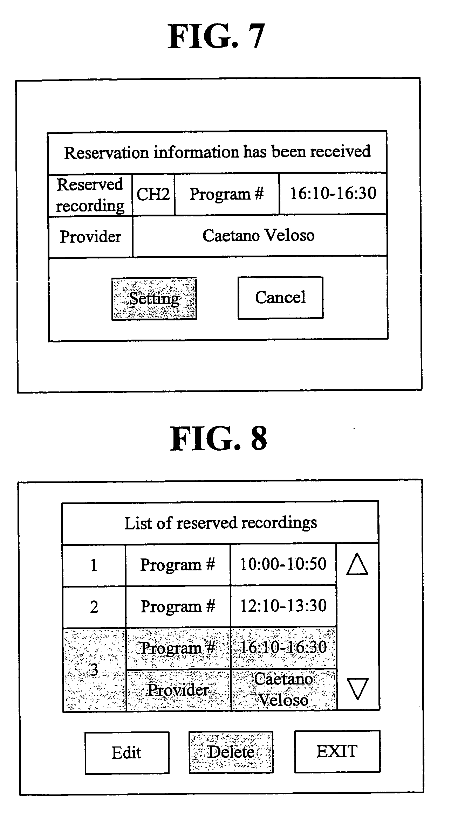

For example, as shown in FIG. 7, reservation information and identifying information of a transmitting set-top box are displayed along with a guide message indicating that reservation information has been received; the reservation information can be displayed either as reserved watching or reserved recording and identifying information of the transmitting set-top box can be displayed by using the name of a provider (e.g., Caetano Veloso).

The receiving set-top box, if the received reservation information comprises a broadcast program identifier only, can complement reservation information by searching for the channel and the start/end time of the broadcast program included in the received reservation information with reference to EPG information.

The guide message can display a menu item for setting reservation information (e.g., setting) and a menu item for canceling the reservation information (e.g., cancellation); for example, if a receiving set-top box is operating in a broadcast program watching mode, a guide message such as the above is displayed immediately. If the user selects reservation setting S603, identifying information of a transmitting set-top box is stored together with the reservation information in a non-volatile memory being associated with each other S604.

On the other hand, if in a standby mode instead of the broadcast program watching mode, the receiving set-top box skips the operation of displaying a guide message but stores identifying information of a transmitting set-top box together with the reservation information temporarily in a non-volatile memory by associating them with each other. Then, at the time of switching to the broadcast program watching mode, the receiving set-top box displays a guide message as described with reference to FIG. 7. Afterwards, if the user selects reservation setting, the receiving set-top box stores identifying information of the transmitting set-top box together with the reservation information in the non-volatile memory, while if the user selects cancellation, deleting the temporarily stored reservation information and identifying information of the transmitting set-top box.

If reservation information is received by the receiving set-top box and stored temporarily in a memory, reservation can be made automatically according to the reservation information without intervention of the user. If reservation is made, the receiving set-top box can then tune in to the corresponding broadcast channel at the start time of a broadcast program according to the preset reservation information, after which the receiving set-top box can play the broadcast program received through the broadcast channel or record it in a hard disk.

The receiving set-top box, if a request for displaying a reservation information list is made by the user S605, displays the reservation information set up according to the above procedure separately from the reservation information set up according to a normal procedure S606; for example, as shown in FIG. 8, additional information is not displayed in the reserved recording information set up for reserved recording at the receiving set-top box.

on the other hand, as shown in FIG. 8, a provider's name can be additionally displayed in the reserved recording information provided by the transmitting set-top box to be used for identifying information of the transmitting set-top box which provides the reserved recording information.

Accordingly, the user can identify reservation information received through a network from among reservation information displayed in the reservation list; also, since the user can check the provider's name, he or she can delete or edit the corresponding reservation information.

Meanwhile, the transmitting set-top box, instead of transmitting reservation information directly to the receiving set-top box, can transmit the reservation information through a server.

A receiving set-top box attempting to receive and set up reservation information, while applying for a remote reservation service to a server related to the corresponding set-top box, e.g., a server operated by the manufacturer of the set-top box or the distributor thereof, can transmit the identifier (and/or the user's name or identifier) and IP address of the corresponding set-top box, where the identifier of the set-top box can comprise information about product type of the corresponding set-top box.

At this time, the set-top box, after searching EPG and checking broadcast channel information available based on the channel information set up in the corresponding set-top box, can send the checked broadcast channel information additionally to a server. Also, the set-top box can send the name (or identifier) of the user supposed to set reservation information to the server to limit users allowed to set reservation information remotely.

The server, when the user attempting to set reservation information at a remote place accesses a database, can list up only the receiving set-top boxes allowing the corresponding user to set up reservation information by using the name (or identifier) of the user (which has been transmitted by the receiving set-top box) supposed to set the reservation information.

A server operated by the corresponding manufacturer or distributor can manage the information transmitted from a set-top box which has applied for a remote reservation service in the database based on the name (or identifier) of the user or identifier of the set-top box.

The user attempting to set reservation information remotely can access the database of the server by using the transmitting set-top box and select the corresponding target receiving set-top box in which reservation information is set remotely; information about the selected set-top box can then be received from a server and stored in the memory of the transmitting set-top box.

The transmitting set-top box, by generating reservation information by using the method described through FIGS. 3 to 5, can transmit the generated reservation information directly to the receiving set-top box or a server operated by the corresponding manufacturer or distributor. In the latter case, the reservation information transmitted to the server can further comprise identifying information (user information or IP address) of the receiving set-top box.

When the transmitting set-top box generates reservation information, it is determined based on the information about the receiving set-top box received from a server whether the channel selected by reserved watching or reserved recording is supported at the receiving set-top box; if the corresponding channel is not supported at the receiving set-top box, external transmission items in FIG. 4 can be made not to be displayed or a guide message informing the situation can be additionally displayed.

The server, managing reservation information transmitted from the transmitting set-top box in a database, can manage the database in association with set-top boxes which have applied for the remote reservation service. At this time, the server can convert the reservation information transmitted from the transmitting set-top box to the format suitable for the set-top box supposed to receive the reservation information and store the converted reservation information.

The set-top box which has applied for a remote reservation service, by connecting to the server periodically, can receive reservation information transmitted from a different set-top box and store the received reservation information in a memory or display a guide message.

The preferred embodiments of the present invention described above have been introduced for the purpose of illustration. Therefore, it should be understood that various kinds of improvement, modification, and substitution of the embodiments; and addition thereof are possible to those skilled in the art within the technical principles and scope of the present invention defined by appended claims.

### List of Embodiments:

1. A method for setting reservation in a broadcast receiver, comprising:
   a first broadcast receiver's generating reservation information supposed to be applied to a second broadcast receiver for carrying out reserved playing or recording of a broadcast program, the reservation information comprising an identifier of a broadcast program for reserved playing or recording; and
   the first broadcast receiver's transmitting the generated reservation information through a network.
2. The method of embodiment 1, wherein the first broadcast receiver either transmits the reservation information directly to the second broadcast receiver or transmits to the second broadcast receiver through a server related to broadcast receivers.
3. The method of embodiment 2, wherein the first broadcast receiver, before generating the reservation information, receives broadcast channel information which can be received by the second broadcast receiver from the server.
4. The method of embodiment 2, wherein the first broadcast receiver, at the time of transmitting the reservation information through the server, additionally transmits to the server at least one or more of identifying information of the second broadcast receiver, user identification information of the second broadcast receiver, and IP address of the second broadcast receiver.
5. The method of embodiment 4, wherein reservation information transmitted to the server is converted by the server in such a way to be applied for the second broadcast receiver and thus transmitted to the second broadcast receiver together with identifying information of the first broadcast receiver.
6. The method of embodiment 1, wherein the transmitting transmits identifying information of the first broadcast receiver additionally together with the reservation information.
7. A method for setting reservation in a broadcast receiver, comprising:
   transmitting identifying information and IP address of a broadcast receiver to a server related to a broadcast receiver;
   receiving reservation information from the server transmitted from another broadcast receiver and storing the received reservation information in a memory or displaying a guide message; and
   once the reservation information is set in the broadcast receiver, playing or recording a broadcast program according to the reservation information.
8. The method of embodiment 7, wherein the transmitting further transmits channel information which can be received by the broadcast receiver.
9. The method of embodiment 7, wherein the transmitting further transmits user identification information used for setting reservation information remotely.
10. The method of embodiment 7, wherein the receiving further receives identifying information of said another broadcast receiver together with the reservation information and displays identifying information of said another broadcast receiver at the time of displaying the reservation information.
11. A broadcast receiver, comprising:
   a image generation unit for displaying reservation information or displaying another broadcast receiver for setting reservation information;
   a communication unit for transmitting and receiving data through a network; and
   a controller for generating reservation information supposed to be applied to said another broadcast receiver for carrying out reserved playing or recording of a broadcast program and transmitting the generated reservation information and its own broadcast receiver's identifying information directly to said another broadcast receiver or to said another broadcast receiver through a server related to broadcast receivers by controlling the communication unit, wherein the reservation information comprises an identifier of a broadcast program for which reserved playing or recording is applied at said another broadcast receiver.
12. The broadcast receiver of embodiment 11, wherein the controller receives from the server broadcast channel information which can be received by said another broadcast receiver and generates the reservation information with reference to the broadcast channel information.

## Claims

1. A method for setting reservation in a broadcast receiver, comprising:
- a first broadcast receiver's generating reservation information supposed to be applied to a second broadcast receiver for carrying out reserved playing or recording of a broadcast program, the reservation information comprising an identifier of a broadcast program for reserved playing or recording; and
- the first broadcast receiver's transmitting the generated reservation information through a network.

2. The method of claim 1, wherein the first broadcast receiver either transmits the reservation information directly to the second broadcast receiver or transmits to the second broadcast receiver through a server related to broadcast receivers.

3. The method of claim 2, wherein the first broadcast receiver, before generating the reservation information, receives broadcast channel information, which can be received by the second broadcast receiver from the server.

4. The method of claim 2, wherein the first broadcast receiver, at the time of transmitting the reservation information through the server, additionally transmits to the server at least one or more of identifying information of the second broadcast receiver, user identification information of the second broadcast receiver, and IP address of the second broadcast receiver.

5. The method of claim 4, wherein reservation information transmitted to the server is converted by the server in such a way to be applied for the second broadcast receiver and thus transmitted to the second broadcast receiver together with identifying information of the first broadcast receiver.

6. The method of claim 1, wherein the transmitting transmits identifying information of the first broadcast receiver additionally together with the reservation information.

7. The method of claim 1, further comprising:
the first broadcast receiver's transmitting identifying information and IP address of a broadcast receiver to a server related to a broadcast receiver;
the first broadcast receiver's receiving another reservation information from the server transmitted from another broadcast receiver and storing the received reservation information in a memory or displaying a guide message; and
the first broadcast receiver's playing or recording a broadcast program according to said another reservation information.

8. The method of claim 7, wherein the transmitting identifying information further transmits channel information which can be received by the first broadcast receiver.

9. The method of claim 7, wherein the transmitting identifying information further transmits user identification information used for setting reservation information remotely.

10. The method of claim 7, wherein the receiving further receives identifying information of said another broadcast receiver together with said another reservation information and displays the received identifying information of said another broadcast receiver at the time of displaying said another reservation information.

11. A broadcast receiver, comprising:
- an image generation unit for displaying reservation information or displaying another broadcast receiver for setting reservation information;
- a communication unit for transmitting and receiving data through a network; and
- a controller for generating reservation information supposed to be applied to said another broadcast receiver for carrying out reserved playing or recording of a broadcast program and transmitting the generated reservation information and its own broadcast receiver's identifying information directly to said another broadcast receiver or to said another broadcast receiver through a server related to broadcast receivers by controlling the communication unit, wherein the reservation information comprises an identifier of a broadcast program for which reserved playing or recording is applied at said another broadcast receiver.

12. The broadcast receiver of claim 11, wherein the controller receives from the server broadcast channel information which can be received by said another broadcast receiver and generates the reservation information with reference to the broadcast channel information.
